# EUROPEAN PATENT SPECIFICATION

(11) **EP 1 577 751 B1**
(45) Date of publication and mention of the grant of the patent: **18.11.2009**
(21) Application number: 04006187.1
(22) Date of filing: 16.03.2004
(51) Int. Cl.: G06F 9/44

(54) **Method, computer program product and data processing system for entering assignments of a first object of a first object hierarchy to objects of a second object hierarchy**
Verfahren, Computerprogrammprodukt und Datenverarbeitungssystem zur Eingabe von Zuweisungen zwischen einem ersten Objekten aus einer ersten Objekthierarchie und Objekten aus einer zweiten Objekthierarchie
Procédé, produit de programme d'ordinateur et système de traitement de données pour saisir des affectations entre un premier objet d'une première hierarchie d'objets et des objects d'une seconde hierarchie d'objects

(43) Date of publication of application: 21.09.2005
(73) Proprietor: SAP AG, 69190 Walldorf (DE)
(72) Inventor: Rapp, Roman A., 06600 Antibes (FR)
(74) Representative: Richardt, Markus Albert

(56) References cited:
- EP-A- 1 331 553
- EP-A- 1 376 323
- US-A- 6 115 044
- US-A1- 2003 079 182

## Description

### Field of the invention.

The present invention relates to the field of data processing, and more particularly without limitation, to graphical user interfaces for entering object assignments.

### Background and prior art

Graphical user interfaces that enable a user to manipulate graphical symbols or items representing objects are as such known from the prior art. For example US Patent Number 5,542,086 shows an object-oriented operating system in which object classes are classified to a file object from different computer systems at the level of the operating system.

US Patent Number 5,710,894 shows an apparatus for providing dynamic classification of objects. The dynamic classification of objects is performed within a simulator environment using a graphical user interface related to the simulator environment.

Typically, hierarchies that help to structure assignments between objects are administrated through graphical user interfaces, such as the Microsoft Windows Explorer or the cost assignment view of ABC Technologies OROS program.

For example, in the Microsoft Windows Explorer, a folder structure is built in the form of a hierarchy. Objects of three different object types (folders, files and shortcuts) can be graphically assigned to a folder. The computer user, in the following called user, maintains the hierarchy through
(a) a combination of menu entries in the drop down menus of the Windows Explorer,
(b) menu entries in a context menu launched with the right mouse button and
(c) "drag & drop" functions launched with the left or right mouse buttons. Also shortcuts via the keyboard can be used. For example, new folders or shortcuts can be created by selecting an appropriate menu entry from the "File" menu or from the context menu; for instance, folders or files can be moved or copied by using the right mouse button for "drag & drop". Files, folders or shortcuts can be deleted by using the context menu with the right mouse button. For each object type only specific activities are allowed. For instance, a folder cannot be graphically assigned to a file or shortcut. A shortcut cannot be graphically assigned to a file but is assigned to the file in a logical relationship.

The OROS program allows the user to graphically define assignments between objects of two different hierarchies. Both hierarchies work similar to the Windows Explorer logic for adding, moving or deleting objects. Both hierarchies support three different object types: centre type, account type and cost element type.

For example, a first hierarchy shows the resource view of an enterprise. A centre can define a group of resources. Centres can be assigned to other centres. An account can define a specific resource, such as a machine or a building. Accounts can be assigned to centres. A cost element defines a specific type of cost, such as salary, rent etc. Cost element can be assigned to accounts.

A second hierarchy, for example, shows the activity view of an enterprise, where centres define groups of activities, accounts define activities and cost elements, again, define specific types of cost. Similar to the first hierarchy, cost elements are assigned to accounts and accounts are assigned to centres.

When the user creates an assignment between objects of the first hierarchy and the second one, only accounts of the first hierarchy can be assigned to accounts of the second hierarchy and vice versa. The graphical user interface supports this assignment, for example, by displaying the first hierarchy (sender objects) within the first frame and only the accounts of the second hierarchy (receiver objects) as a flat object list within a second frame. When the user selects an account of the first hierarchy in the first frame, account in the second frame became a possible target for the assignment. This is indicated by little arrows icons next to each of the account in the second frame. To create the assignment the user selects one account in the second frame by clicking on the corresponding arrow icon and finally enters an assignment category and an assignment value to specify the assignment.

These examples work very well with applications that only use a limited number of object types (three in the examples above) with a limited number of possible relationships between these objects. Therefore, they provide an easy-to-use solution for graphical maintenance of assignments in application systems that do not show a high degree of complexity as far as the number of object types and their possible dependencies are concerned. However, more complex application systems, such as Enterprise Resource Planning (ERP) systems (e.g. mySAP ERP) usually support a much higher number of object types. Also the number of possible relations between the various object types is very high.

When applying the prior art user interface models to complex application systems, such as ERP systems, the user encounters some inconveniences when creating assignments within or across hierarchies. This becomes obvious when looking at a typical organisational structure of an enterprise in an ERP system from a cost management point of view.

For example, in the mySAP ERP system, a controlling area defines an area that is relevant for an enterprise from a cost management point of view. In each controlling area a hierarchy of cost centre groups is defined. Multiple cost centres are assigned to a cost centre group. For each cost centre multiple cost elements are assigned either directly to the cost centre or to activities of the cost centre. Cost elements can be grouped into cost element groups. In a further hierarchy internal orders can be defined. Cost centres with cost element groups or activities can be assigned to internal orders. On the other hand internal orders can be assigned back to cost centres. The same is true for projects and project elements. Cost centre activities can also be assigned to production or sales orders. For convenience of explanation, further object type relations are not listed here. Numerous further object types and their possible relations to other object types within the same or across hierarchies can be taken from "CO-I Overhead Cost Controlling", published in September 1999 by SAP AG.

The user desired a clear visualization of all actual and possible dependencies between object types. For assignments across hierarchies a flat list of receiver objects, as in the prior art example, would contain a large amount of objects of different object types. This leaves the task to identify the right receiver object for an assignment completely with the user (e.g. by applying the right mouse button to every single object). To identify the receiver object is difficult because the information about the location of the receiver object within the hierarchy is hidden.

This problem is addressed by the method and computer system for graphical assignments in hierarchies known from EP1331553 A1 which is the point of departure of the present invention. This method enables to enter object assignments within and across hierarchies for applications using a large number of object types with a large number of object type relations.

US 6,115,044 shows a data processor controlled display with a tree of items. A modification of a property of all child items of a parent item can be performed by performing the modification of the property at the parent level.

EP 1 376 323 A1 shows a graphic user interface for hierarchically organized objects. The graphic user interface allows visualizing and modifying object properties of an object together with one or more of its descendents without having to repeatedly select the objects.

The present invention aims to provide an improved method, computer program product and data processing system for entering object assignments.

### Summary of the invention

The present invention provides for a method of entering at least one assignment of a first object of a first object hierarchy to at least a second object of a second object hierarchy. At least the second object hierarchy has at least one folder object. The folder object is the root of a sub-hierarchy of objects. All objects of the first and second object hierarchies have object types of a pre-defined set of object types. The predefined set of object types has sub-sets. The first object selected from the first object hierarchy has an object type having an associated sub-set. The sub-set determines those objects of the second object hierarchy that can be assigned to the first object.

For entering one or more assignments the first and second object hierarchies are displayed. Next a user selects one of the objects from the first object hierarchy. If the folder object has at least one object in ist sub-hierarchy that has an object type of the sub-set associated with the selected first object an indicator symbol is displayed for the folder object of the second hierarchy. In response to a user's selection of the folder object when the indicator symbol is displayed, assignment symbols between the first object and the folder object and / or at least one object having an object type of the sub-set are displayed.

The present invention is particularly advantageous as it provides a graphical user interface that facilitates entering of a large number of object assignments.

For example, the second object hierarchy can have multiple folder objects, each of which containing a large number of objects having object types of the sub-set associated with the user selected first object of the first object hierarchy. The prior art would require a user to manually enter each individual assignment. In contrast the present invention enables to reduce the users data entry task for entering of the desired assignments to entering selections of the folder objects as identified by the indicator symbols.

This has applications in various fields, including assignment of objects in a telecommunication network planning and administration, e.g. where the first object of the first object hierarchy is representative of a sender having multiple potential receivers represented by respective second objects in the second object hierarchy. Other applications include logistics, where the sender object is an entity delivering a part and a receiving object is an entity receiving the part. Further, the present invention is particularly advantageous for business software, especially for administration of cost centres and their respective assignments.

In accordance with a preferred embodiment of the invention the assignment symbols that are displayed between the selected first object and the selected object folder and / or the objects having matching object types are representative of respective edges linking the first and second object hierarchies. The linking edges as well as the edges of each of the object hierarchies are stored in database tables.

In accordance with a further preferred embodiment of the invention a user can select between first and second assignment entry modes. In the first assignment entry mode a defining edge is entered between the first object and the folder object in response to a user selection of the folder object when the indicator symbol is displayed.

In addition dependent edges are created automatically in response to the user's selection of the object folder when the indicator symbol is displayed. The depending edges depend on the defining edge and link the first object with respective objects of the sub-hierarchy of the folder object having object types within the sub-set of object types associated with the first object. This first assignment entry mode has the advantage that deletion of assignments is facilitated. Deletion of the assignments is accomplished by deletion of the assignment between the first object and the folder object that causes deletion of the defining edge and thus all dependent edges that depend on the defining edge. This has the advantage that the tedious task of manually deleting a large number of individual assignments can be avoided.

In the second assignment entry mode only independent edges are entered. When the user selects the folder object with the indicator symbol assignment symbols are displayed between the first object and the folder object as well as between the first object and the objects of the sub-hierarchy of the folder objects that have a matching object type whereby the assignment symbols are identical.

The assignment symbols are representative of independent edges that link the first object and the selected folder object as well as the first object and the objects of the sub-hierarchy of the folder object that have matching object types. In contrast to the first assignment entry mode the user can manually erase selected ones of the assignment symbols for erasure of the respective independent edges. This has the advantage of giving the user complete freedom regarding entering and deletion of assignments but may require more manual interaction.

In another aspect the present invention concerns a data processing system for execution of a computer program product in order to perform a method of the invention. The computer program product has computer executable instructions that are stored on a digital storage medium. Preferably the data processing system has a rule database for storing of the sub-sets of object types and their association to object types.

In accordance with a further preferred embodiment of the invention the data processing system has a database for storing the nodes and the edges of the first and second object hierarchies as well as the edges linking the first and second object hierarchies. Preferably the database has a database table for entering of the edges that enables entry of defining and depending edges as well as entry of independent edges in accordance with the user selected assignment entry mode.

### Brief description of the drawings

In the further preferred embodiments of the invention will be described by way of example only making reference to the drawings in which:
- Figure 1: Shows a block diagram of an embodiment of a computer system of the invention,
- Figure 2: Shows a flowchart illustrating an embodiment of a method of the invention,
- Figure 3: Is a schematic example for a rule base.
- Figure 4: Illustrates the display of first and second object hierarchies on a graphical user interface,
- Figure 5: Illustrates object assignments between the object hierarchies in persistent mode.
- Figure 6: Shows a database table for storing the object assignments in persistent mode.
- Figure 7: Shows object assignments in non-persistent mode.
- Figure 8: Shows a database table for storing the object assignments in the non-persistent mode,
- Figure 9: Is a screen shot illustrating a preferred embodiment of the invention,
- Figure 10: Illustrates the selection of an object in the second hierarchy of the embodiment of figure 9,
- Figure 11: Illustrates the insertion of an object in the first object hierarchy and the inheritance of dependent edges,
- Figure 12: Illustrates the inheritance of assignments of children objects of a source object that is assigned to a target object.

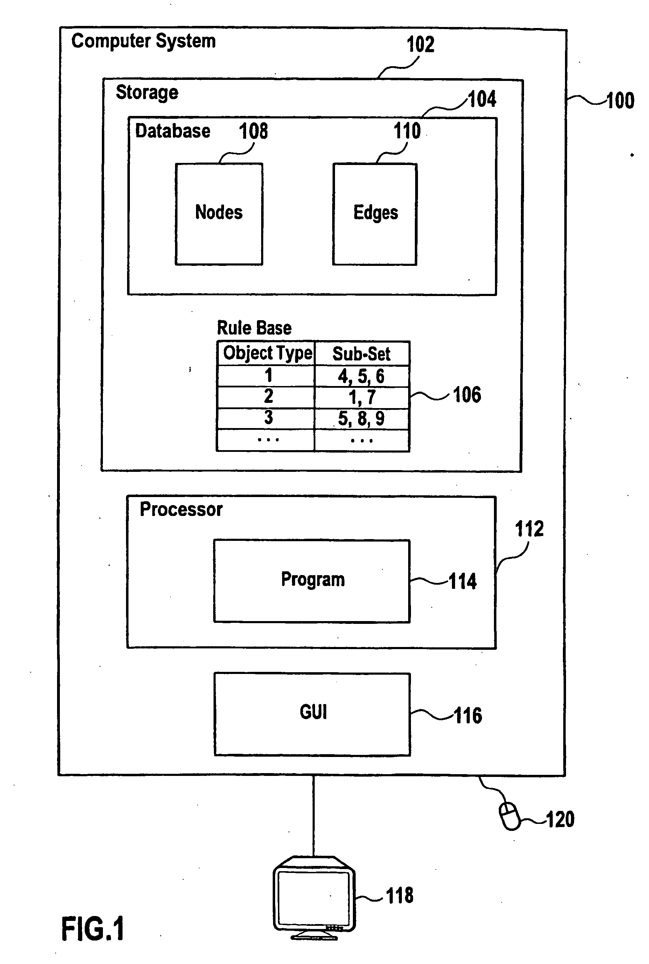

Figure 1 shows computer system 100 that has storage 102 for storing database 104 and rule base 106. Database 104 serves for storage of database tables 108 and 110 for storing of nodes and edges, respectively of two or more object hierarchies. Each node identified in database table 108 is represented by an object having an object type of a pre-defined set of object types.

Rule base 106 serves for storage of object assignment rules. In particular, rule base 106 stores one object assignment rule for each object type of the predefined set of object types. An object assignment rule of a given object type identifies the sub-set of object types of the predefined set of object types. The assignment rule restricts the object assignments that can be entered into computer system 100 to assignments of an object having a given object type to another object having an object type of the sub-set of object types associated with the given object type.

For example, object type 1 has the associated sub-set of object types 4, 5, 6. In other words an object having object type 1 can only be assigned to another object having one of the object types 4, 5 or 6 of the sub-set associated to object type 1. Likewise object type 2 has associated sub-set 1, 7 of objects types. An object of object type 2 can only be assigned to another object having one of the object types 1 or 7 or the sub-set associated to object type 2, etc.

Computer system 100 has processor 112 for executing computer program 114. Graphical user interface (GUI) 116 of computer system 100 serves to provide data display and entry windows on computer monitor 118. Computer mouse 120 is coupled to computer system100 in order to facilitate a users data entry via GUI 116.

In operation a user can select two or more of the object hierarchies stored in database 104 for display on computer monitor 118. The user can enter an object assignment linking two of the selected object hierarchies by selecting a first object in one of the object hierarchies. In response computer program 114 retrieves the object assignment rule associated with the object type of the selected first object from rule base 106.

By means of the object assignment rule computer program 114 identifies objects within the other object hierarchy that have object types of the sub-set indicated in the retrieved object assignment rule. Indicator symbols are displayed for the folder objects containing objects of the relevant object types and / or indicator symbols for the individual objects of the relevant object types. A user can enter object assignments between the first object and the objects having the relevant object types contained in one of the folder objects by selecting that folder object. If the folder object has a large number of objects having the relevant object types this prevents the tedious task of manually entering the object assignments from the first object to the objects having the relevant object types contained in the sub-hierarchy of a folder object.

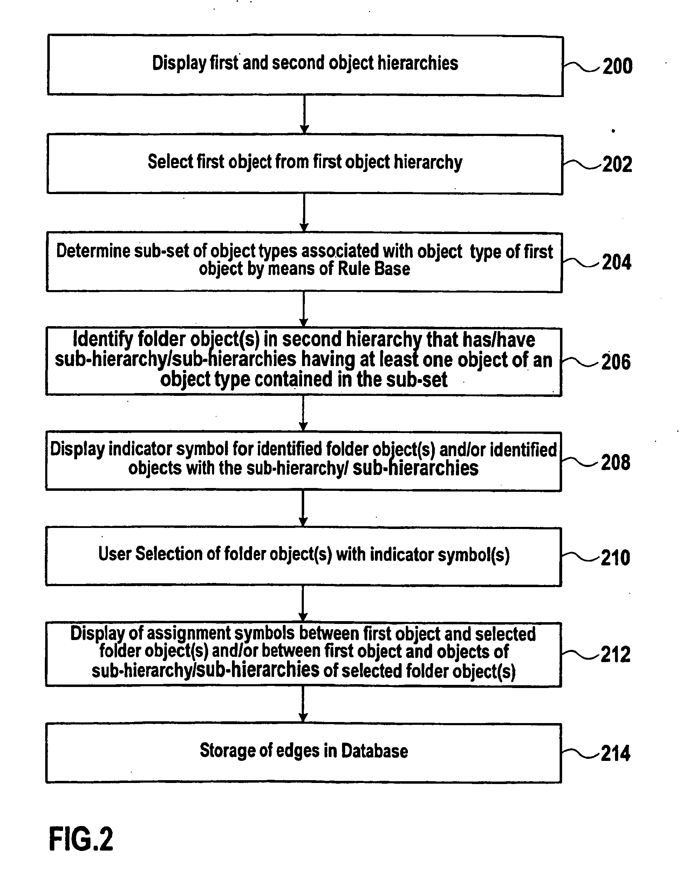

Figure 2 shows a corresponding flow chart. In step 200 first and second object hierarchies are selected by a user and displayed on the computer monitor. In step 202 the user selects the first object from the first object hierarchy. For example, the selection of the first object is performed by clicking on the first object by means of the computer mouse.

In step 204 the object assignment rule associated with the object type of the first objects is retrieved from the rule base in order to determine the sub-set of object types associated with the object type of the first object.

In step 206 folder objects in the second hierarchy are identified that have one or more sub-hierarchies containing at least one object of an object type contained in the sub-set of object types determined in step 204. In step 208 an indicator symbol is displayed for each one of the identified folder objects and / or the identified objects within the folder objects if the folder objects are displayed in an expanded view.

In step 210 a user selects one or more of the folder objects that have indicator symbols. In response assignment symbols between the first object and the selected folder objects and / or between the objects within the respective sub-hierarchies are displayed (step 212). In step 214 the object assignments are stored as edges in the database.

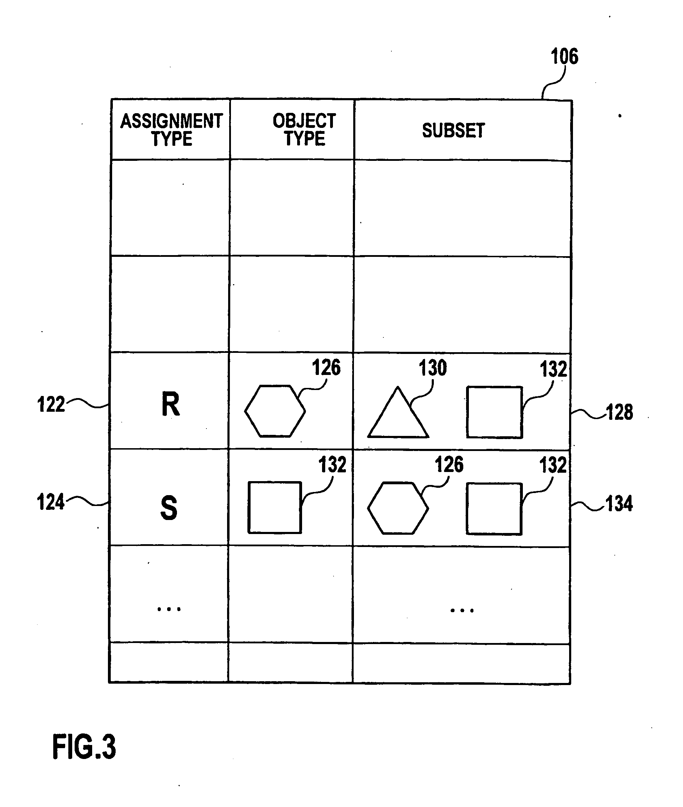

Figure 3 shows an example for rule base 106. Rule base 106 stores object assignment rules for various object assignment types. In particular, rule base 106 can include object assignment types regarding object assignments within a current object hierarchy, such as parent-child object type assignments or child-parent object type assignments.

Furthermore rule base 106 shows an object assignment rule of object assignment type receiver 'R' and object assignment rule 124 of object assignment type sender 'S'. Object assignment rule 122 relates to object type 126 that is graphically represented by a hexagon. Sub-set 128 containing object types 130 and 132 is associated with object type 126 which constitutes object assignment rule 122. Object type 130 is graphically represented by a triangle and object type 132 is graphically represented by a square. According to object assignment rule 122 an object having object type 126 can only be a sender object for a receiver object if the receiver object has one of the object types 130 or 132. It is to be noted that rule base 106 is not essential for the present invention. If no rule base is used each object type can be assigned to any other object type.

Object assignment rule 124 relates to object type 132 as a receiver object. Object assignment rule 124 has sub-set 134 of object types 126 and 132.

According to object assignment rule 124 an object having object type 132 can only be the receiver object for a sender object if the sender object has one of the object types 126 or 132 contained in sub-set 134.

It is to be noted that the number of object types contained in one of the sub-sets of rule base 106 is not limited and can contain a large number of object types depending on the application.

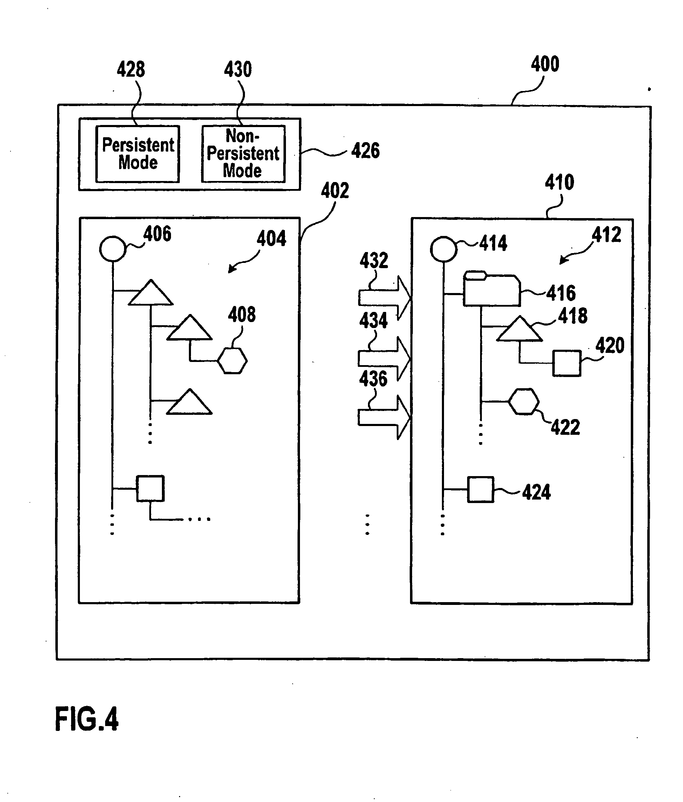

Figure 4 shows window 400 displayed on computer monitor 118 (cf. figure 1). Window 400 has area 402 for displaying a user selected object hierarchy 404. Object hierarchy 404 has root object 406 from which a number of objects depend. Object hierarchy 404 has object 408 of object type 126 (cf. rule base 106).

Window 400 has area 410 for display of another user selected object hierarchy 412. Window 400 can have additional areas for display of additional user selected object hierarchies.

Object hierarchy 412 has root object 414. Folder object 416 depends on root object 414. Folder object 416 is the root of a sub-hierarchy containing a number of objects including objects 418, 420 and 422.

In addition, object hierarchy 412 has at least one object 424 that directly depends on root object 414. In addition object hierarchy 412 can include a large number of additional folder objects each containing one or more sub-hierarchies, in other words folder object and objects. It is to be noted that folder object 416 has objects 418 and 420 of object types 130 and 132 , respectively (cf. rule base 106 of figure 3).

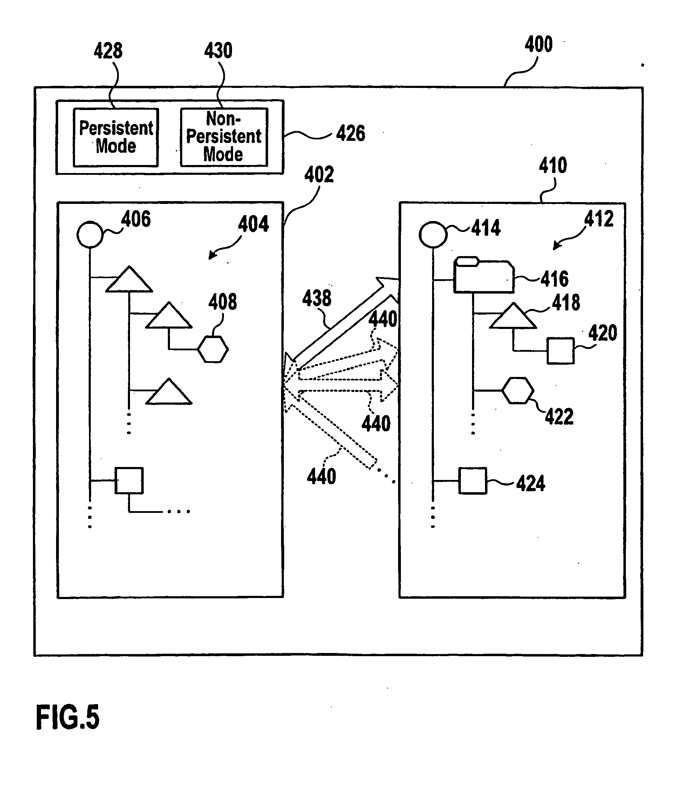

Window 400 has action bar 426 containing virtual buttons 428 and 430. The button 428 serves for a user's selection of the 'persistent' entry mode, and button 430 for selection of the 'non-persistent' entry mode. The difference between the persistent and non-persistent entry modes will be explained in greater detail in the following by making reference to figures 5 to 8.

For the purpose of explanation it is assumed that the user has clicked on button 428 for selection of the persistent entry mode. When the user selects object 408 of object hierarchy 404, e.g. by clicking on object 408, the following happens: Computer program 114 (cf. figure 1) retrieves the object assignment rule for the object type 126 or object 408 from rule base 106 (cf. figure 1 and figure 3). The retrieved object assignment rule has a sub-set of object types. Computer program 114 identifies objects within object hierarchy 412 that have one of the object types as given by the sub-set. In the example considered here, these are the objects 418 and 420. In addition there can be a large number of additional objects having object types contained in the sub-set which are not shown in figure 4 for ease of explanation.

Computer program 114 generates an output in order to display indicator symbols 432, 434, and 436. Indicator symbol 432 points to folder object 416 as folder object 416 contains objects having object types contained in the sub-set. Indicator symbol 434 points to object 418 and indicator symbol 436 points to object 420 as objects 418 and 420 have object types contained in the sub-set associated with object type 126 of object 408. If there are additional objects within object hierarchy 412 having the relevant object types contained in the sub-set corresponding additional indicator symbols are displayed. Likewise if there are additional folder objects within object hierarchy 412 containing at least one object of the relevant object type contained in the sub-set corresponding additional indicator symbols pointing to these additional folder objects are displayed.

The user can now enter multiple object assignments by means of a single input operation. By selecting folder object 416, e.g. by clicking on folder object 416 by means of computer mouse 120 (cf. figure 1), all object assignments between object 408 and the objects contained in folder object 416 having the relevant object types are created.

In the selected persistent entry mode the object assignment between object 408 and folder object 416 is represented by double headed arrow symbol 438 whereas the object assignments between object 408 and objects 418, 422 within the sub-hierarchy of folder object 416 are displayed by means of dashed double headed arrow symbols 440. If there are additional objects within the sub-hierarchy of folder object 416 that have one of the relevant object types corresponding additional arrow symbols 440 are displayed to show the respective additional object assignments.

It is to be noted that a user can enter a large number of object assignments by selecting a folder object identified by an indicator symbol. This avoids a need for multiple data entry operations in order to enter each object assignment separately.

In the selected persistent entry mode the edge that is represented by arrow symbol 438 is a defining edge, whereas the edges represented by arrow symbols 440 are dependent edges that depend from the defining edge. The dependent edges cannot be deleted individually but only collectively by deleting the defining edge from which the dependent edges depend.

In the preferred embodiment considered here, a user can thus not delete individual arrow symbols 440 for deletion of the corresponding dependent edges, but only arrow symbol 438 for deletion of the corresponding defining edge and thus all arrow symbols 440 representing dependent edges depending from that defining edge.

It is to be noted that in the embodiment of Figure 5 the folder object 416 is shown in an expanded view, i.e. a view showing the sub-hierarchy of objects of which folder object 416 is the root. Alternatively a user can select a compressed view, i.e. a view where the sub-hierarchy of objects is not visible but only the root of the sub-hierarchy, i.e. folder object 416. In the latter case only arrow symbol 438 is shown. When the user performs an input operation to switch into the expanded view the sub-hierarchy becomes visible and the arrow symbols 440 are displayed as well.

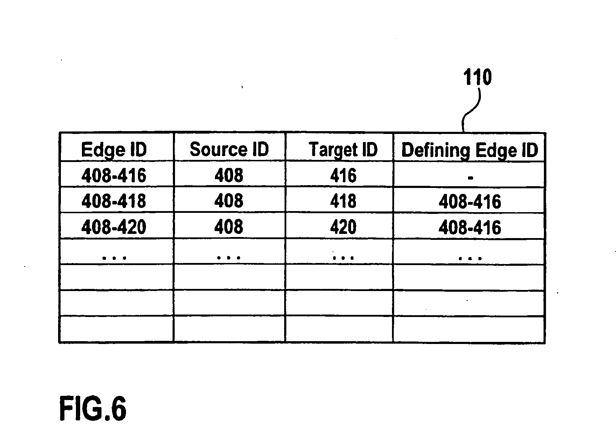

Figure 6 shows an implementation of database table 110 (cf. figure 1) that is useful for the persistent data entry mode. In the example considered here the unique identifier ID of an edge is given by the reference numeral of its source object and its target object. Thus the defining edge as represented by arrow symbol 438 has edge ID 408 - 416 as its source object has source ID 408 and its target object has target ID 416.

Since arrow symbol 438 represents a defining edge no entry is made and the defining edge ID column of database table 110. The edge linking objects 408 and 418 has edge ID 408 - 418 and depends from edge having edge ID 408-416. The defining edge of dependent edge 408-418 is identified in database table 110 by entering the corresponding edge ID of the defining edge in the defining edge ID column of database table 110. The same applies analogously for the edge between object 408 and 420 and any additional objects having one of the relevant object types that can be contained within folder object 416.

For erasing the object assignments between object 408 and the objects within folder object 416 the user selects arrow symbol 438 and performs a delete operation. This way arrow symbol 438 and arrow symbols 440 representing dependent edges that depend from the defining edge as represented by arrow symbol 438 are erased as well as the corresponding entries in database table 110.

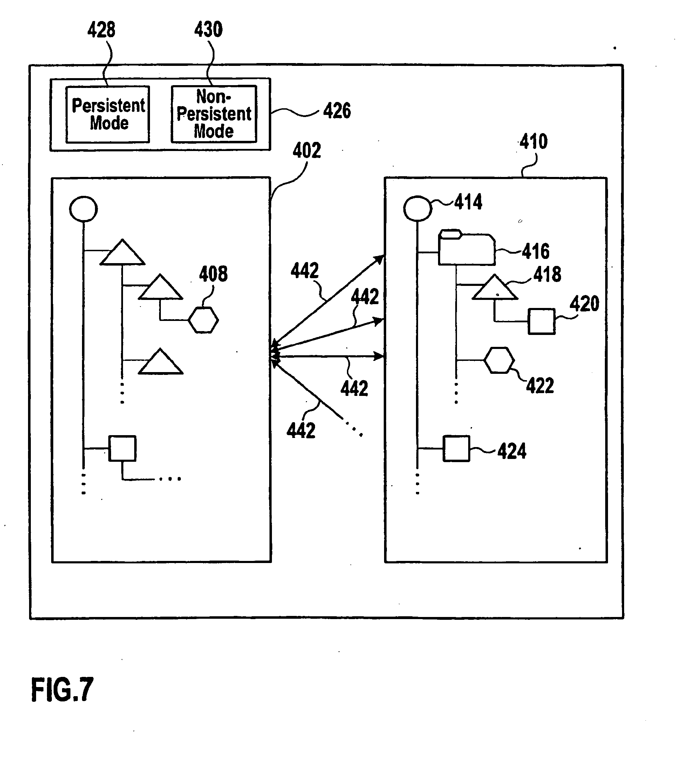

Figure 7 illustrates the non-persistent data entry mode that is selected by clicking on button 430. In the non-persistent mode the user selects folder object 416 for creation of object assignments the same way as in the persistent mode as explained above with reference to figures 4, 5 and 6. In the persistent mode the edges that are thus created are represented by arrow symbols 444. In contrast to the persistent mode all of the edges that have been entered are independent edges that can be deleted individually. Hence, the user can select one or more of the arrow symbols 442 in order to perform a delete operation of the selected arrow symbols and thus the independent edges that are represented by those selected arrow symbols.

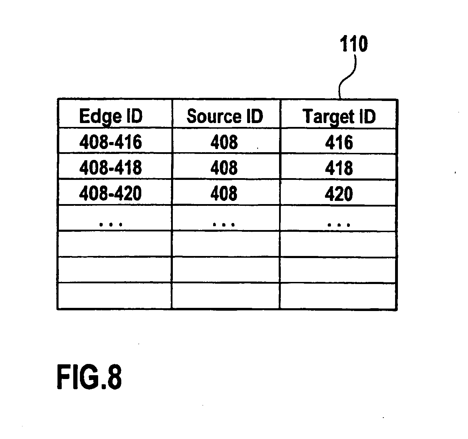

Figure 8 shows an implementation of database table 110 for storage of the independent edges. Table 110 does not require a defining edge ID column as all edges that are entered in non-persistent mode are independent from each other and can be deleted independently from each other. It is also possible to use database table 110 of figure 6 for the non-persistent mode in which case no entry is made in the defining edge ID column for the independent edges.

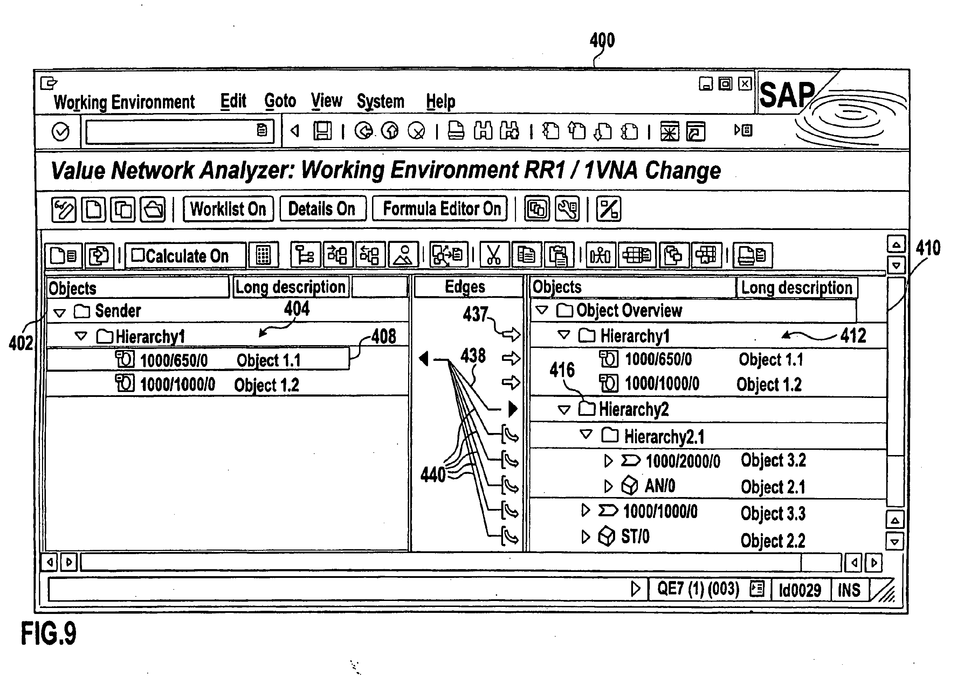

Figure 9 shows another preferred embodiment. Like elements of figure 9 and the preceding figures are designated by the same reference numerals. In the embodiment of figure 9 the user has selected the persistent data entry mode. Further, the user has selected object 408 in object hierarchy 404 which resulted in display of indicator symbols 437 for highlighting of all folder objects and objects having one of the relevant object types. In the example considered here the user has selected folder object 416 which resulted in the creation of a defining edge between object 408 and folder object 416 as represented by arrow symbol 438 and dependent edges as represented by arrow symbols 440.

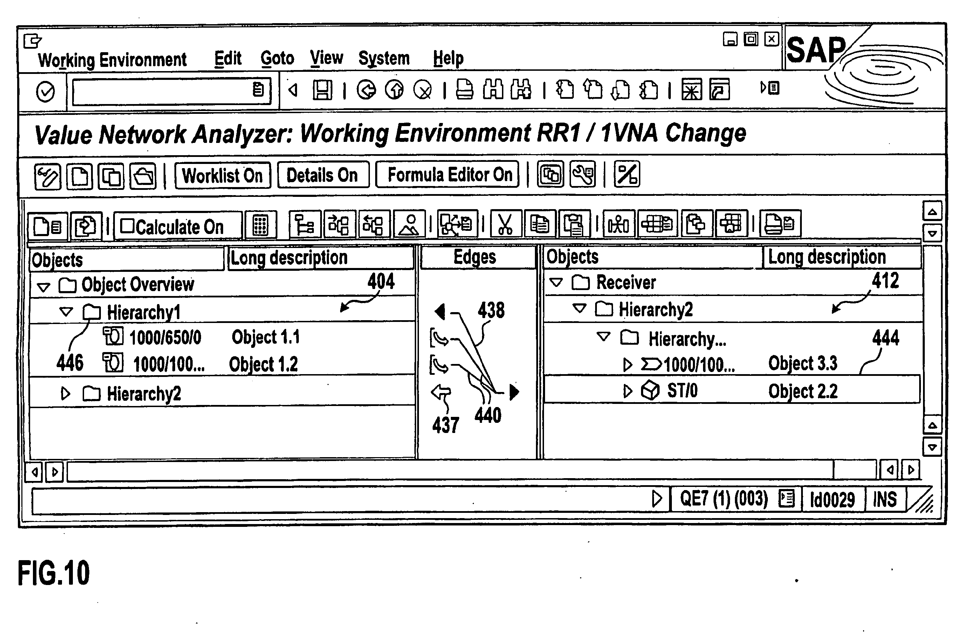

Figure 10 shows another example in the persistent data entry mode. In the example considered here object 444 has been selected by the user in object hierarchy 412 for creation of object assignments to folder object 446 of object hierarchy 404 and to objects within the sub-hierarchy of which folder object 446 is the root object as symbolised by the respective arrow symbols 438 and 440.

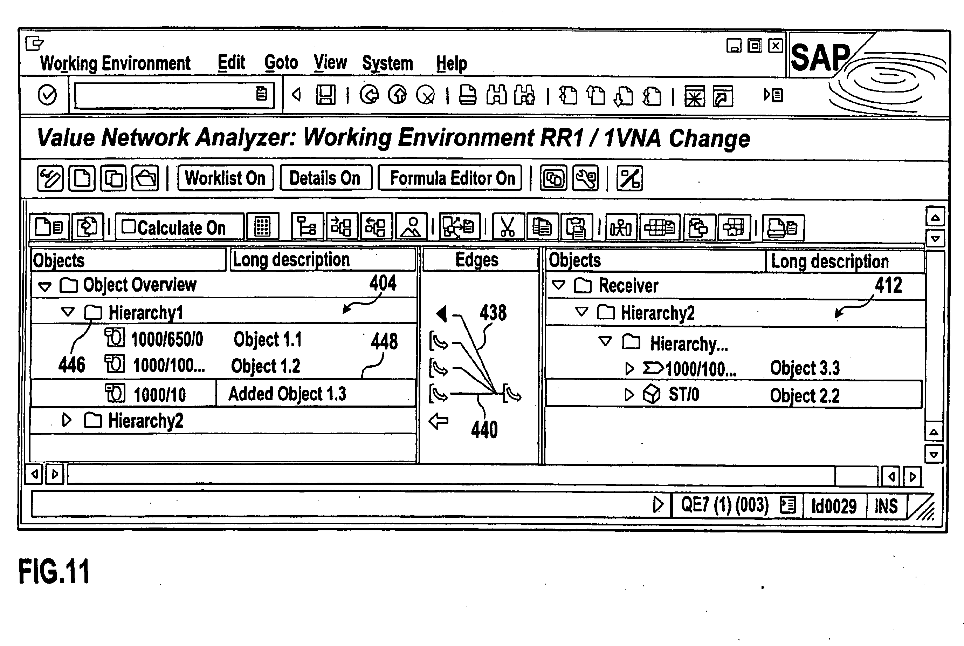

When they user adds an object to the sub-hierarchy of folder object 446 the added object automatically inherits the object assignment as defined by the defining edge represented by arrow symbol 438. This is shown in the embodiment of figure 11 where an arrow symbol 440 is added automatically when object 448 is added to the sub-hierarchy of folder object 446. The edge represented by the additional arrow symbol 440 is a dependent edge that depends from the defining edge represented by arrow symbol 438 and which is entered into the database table 110 (cf. figure 6).

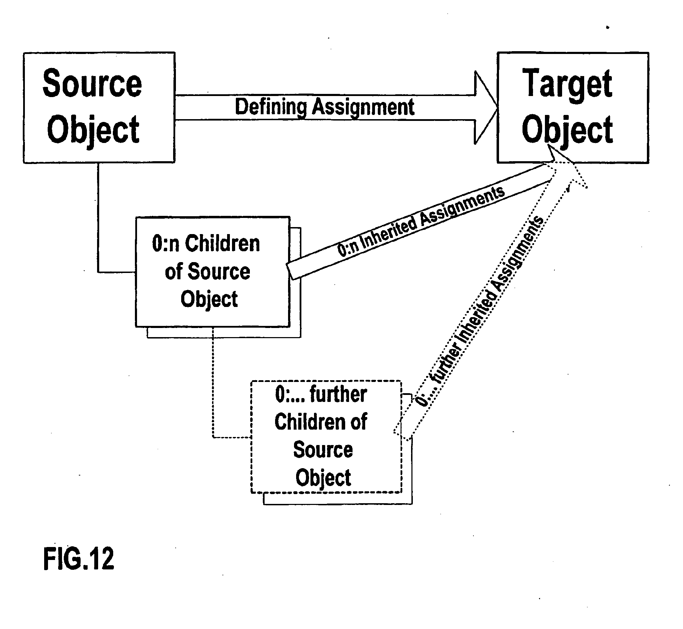

Figure 12 illustrates the inheritance of assignments when children are added to a source object. As illustrated in figure 12 adding children objects to a sub-hierarchy of which the source object is the root node results in an automatic inheritance of the respective object assignments in the persistent data entry mode.

### List of Reference Numerals

- 100: computer system
- 102: storage
- 104: data box
- 106: rule base
- 108: database table
- 110: database table
- 112: processor
- 114: computer program
- 116: GUI
- 118: computer monitor
- 120: computer mouse
- 122: object assignment rule
- 124: object assignment rule
- 126: object type
- 128: sub-set
- 130: object type
- 132: object type
- 134: sub-set
- 400: window
- 402: area
- 404: object hierarchy
- 406: root object
- 408: object
- 410: area
- 412: object hierarchy
- 414: root object
- 416: folder object
- 418: object
- 420: object
- 422: object
- 424: object
- 426: action bar
- 428: button
- 430: button
- 432: indicator symbol
- 434: indicator symbol
- 436: indicator symbol
- 437: indicator symbol
- 438: arrow symbol
- 440: arrow symbol
- 442: arrow symbol
- 444: object
- 446: folder object
- 448: object

## Claims

1. A method of entering assignments of a first object (408) of a first object hierarchy (404) to second objects (416, 418, 420, 448) of a second object hierarchy (412), at least the second object hierarchy having a plurality of objects (414, 416, 418, 420, 422, 424, 448) and at least one folder object (416), each object having an object type of a predefined set of object types (126, 130, 132) , the at least one folder object (416) being the root of a sub-hierarchy of objects (418, 420, 422), the first object having an associated sub-set (130, 132) of the set of object types (128, 134), the method comprising:
- displaying the first and second object hierarchies,
- selecting the first object (408) from the first object hierarchy (404),
- displaying an indicator symbol (432, 434, 436, 437) for the at least one folder object, (416) if the sub-hierarchy of the folder object contains second objects (418, 420) having object types of the sub-set,
- in response to a selection of the folder object (416) when the indicator symbol is displayed, displaying an assignment symbol (438, 440) between the first object (408) and the folder object (416) and/or between the first object and the second objects (418, 420, 422) having object types of the sub-set, whereby the assignments of the first object to the second objects are entered by a single input operation..

2. The method of claim 1, further comprising displaying the sub-hierarchy of the folder object in response to a user input action and displaying assignment symbols between the first object and the folder object and between the first object and the second objects of the sub-hierarchy, the assignment symbols being representative of respective edges linking the first and second object hierarchies.

3. The method of claim 1, further comprising displaying the sub-hierarchy of the folder object and displaying the first assignment symbol and second assignment symbols, the first assignment symbol being representative of a defining edge between the first object and the folder object and the second assignment symbols being representative of respective dependent edges between the first object and the second objects of the sub-hierarchy.

4. The method of claim 3, further comprising assigning a unique identifier to the defining edge and assigning a unique identifier to each of the dependent edges, storing the defining and depending edges in a database table (110) using the respective unique identifiers as keys, whereby the database table has a column for storing the unique identifier of the defining edge for identification of the dependent edges that depend from the defining edge.

5. The method of claim 4, wherein deletion of the defining edge causes automatic deletion of the dependent edges.

6. The method of claim 5, wherein the deletion is performed by a selection of the first assignment symbol and entering a delete command.

7. The method of any one of the preceding claims, further comprising adding an object (448) having an object type of the sub-set to the sub-hierarchy and displaying an assignment symbol between the first object and the object that has been added to the sub-hierarchy.

8. The method of any one of the preceding claims, further comprising performing a mode selection operation for selecting a first or second assignment entry mode, wherein in the first assignment entry mode a defining edge having dependent edges between the first object and second objects of the sub-hierarchy having an object type of the sub-set is entered and wherein in the second assignment entry mode independent edges between the first object and user selected second objects having an object type of the sub-set and belonging to the sub-hierarchy are entered, whereby the independent edges can be erased individually.

9. A computer program product for entering assignments of a first object (408) of a first object hierarchy (404) to second objects (416, 418, 420, 448) of a second object hierarchy (412), at least the second object hierarchy having a plurality of objects and at least one folder object (416) each object having an object type of a predefined set of object types (126, 130, 132), the at least one folder object (416) being the root of a sub-hierarchy of objects (418, 420, 422), the first object having an associated sub-set (130, 132) of the set of object types (128, 134), the computer program product comprising computer executable instructions for:
- displaying the first and second object hierarchies
- a user's selection of the first object (408) from the first object hierarchy (408) by means of a graphical user interface,
- displaying an indicator symbol (432) for the at least one folder object (416) if the sub-hierarchy of the folder object contains second objects (418, 420) having object types (130, 132) of the sub-set,
- in response to a user's selection of the folder object (416) by means of the graphical user interface when the indicator symbol (432) is displayed, displaying an assignment symbol (438, 440) between the first object (408) and the folder object (416) and / or the second objects (418, 420) having object types of the sub-set, whereby the assignments of the first object to the second objects are entered by a single input operation.

10. The computer program product of claim 9 further comprising instructions for accessing a rule base, the rule base storing the sub-set associated with the first object.

11. The computer program product of claim 9 or 10, further comprising computer executable instructions for assigning a unique identifier to the defining edge and assigning a unique identifier to each of the dependent edges, storing the defining and depending edges in a database table (110) using the respective unique identifiers as keys, whereby the database table has a column for storing the unique identifier of the defining edge for identification of the dependent edges that depend from the defining edge.

12. The computer program product of claim 9, 10 or 11, further comprising computer executable instructions for a users entry of a mode selection for selecting a first of a second assignment entry mode, wherein in the first assignment entry mode a defining edge having dependent edges between the first object and second objects of the sub-hierarchy having an object type of the sub-set is entered and wherein in the second assignment entry mode independent edges between the first object and user selected second objects having an object type of the sub-set and belonging to the sub-hierarchy are entered, whereby the independent edges can be erased individually.

13. A data processing system comprising:
- means (104, 108, 110) for storing first and second object hierarchies, at least the second object hierarchy (412) having a plurality of objects and at least one folder object (416) each object of the first and second object hierarchies having an object type of a pre-defined set of object types, the at least one folder object (416) being the root of a sub-hierarchy of objects,
- a rule base (106) for storage of object types and associated sub-sets of the set of object types,
- means (112, 114, 118) for displaying the first and second object hierarchies (404, 412) on a graphical user interface (116), the graphical user interface being adapted to enable a user's selection of the first object (408) from the first object hierarchy (404) and for displaying an indicator symbol (432, 434, 436,...) for the at least one folder object (416) if the sub-hierarchy of the folder object contains second objects (418, 420) having object types (130, 132) of the sub-set associated with the first object, and in response to a user's selection of the folder object (416) when the indicator symbol (432) is displayed, displaying an assignment symbol (438, 440, 442) between the first object (408) and the folder object (416) and / or the second objects (418, 420) of the sub-hierarchy, whereby assignments of the first object to the second objects are entered by a single input operation.

14. The data processing system of claim 13, further comprising means for displaying the sub-hierarchy of the folder object in response to a user input action and displaying assignment symbols between the first object and the folder object and between the first object and the second objects of the sub-hierarchy, the assignment symbols being representative of respective edges linking the first and second object hierarchies.

15. The data processing system of claim 13, further comprising means for displaying the sub-hierarchy of the folder object and displaying the first assignment symbol and second assignment symbols, the first assignment symbol being representative of a defining edge between the first object and the folder object and the second assignment symbols being representative of respective dependent edges between the first object and the second objects of the sub-hierarchy.

16. The data processing system of claim 15, further comprising means for assigning a unique identifier to the defining edge and assigning a unique identifier to each of the dependent edges, storing the defining and depending edges in a database table (110) using the respective unique identifiers as keys, whereby the database table has a column for storing the unique identifier of the defining edge for identification of the dependent edges that depend from the defining edge.

17. The data processing system of any one of claims 13 to 16, the graphical user interface being adapted for a user's entry of a mode selection for selecting a first or second assignment entry mode, wherein in the first assignment entry mode a defining edge having dependent edges between the first object and second objects of the sub-hierarchy having an object type of the sub-set is entered and wherein in the second assignment entry mode independent edges between the first object and user selected second objects having an object type of the sub-set and belonging to the sub-hierarchy are entered, whereby the independent edges can be erased individually.

## Patentansprüche

1. Verfahren zum Eingeben von Zuweisungen eines ersten Objekts (408) einer ersten Objekthierarchie (404) zu zweiten Objekten (416, 418, 420, 448) einer zweiten Objekthierarchie (412), wobei mindestens die zweite Objekthierarchie mehrere Objekte (414, 416, 418, 420, 422, 424, 448) und mindestens ein Ordnerobjekt (416) aufweist, wobei jedes Objekt einen Objekttyp einer vordefinierten Menge von Objekttypen (126, 130, 132) aufweist, wobei mindestens ein Ordnerobjekt (416) die Wurzel einer Teilhierarchie von Objekten (418, 420, 422) ist, wobei das erste Objekt eine assoziierte Teilmenge (130, 132) der Menge von Objekttypen (128, 134) aufweist, wobei das Verfahren die folgenden Schritte umfasst:
- Anzeigen der ersten und der zweiten Objekthierarchie,
- Auswählen des ersten Objekts (408) aus der ersten Objekthierarchie (404),
- Anzeigen eines Indikatorsymbols (432, 434, 436, 437) für das mindestens eine Ordnerobjekt (416), wenn die Teilhierarchie des Ordnerobjekts zweite Objekte (418, 420) enthält, die Objekttypen der Teilmenge aufweisen,
- als Reaktion auf eine Auswahl des Ordnerobjekts (416), wenn das Indikatorsymbol angezeigt wird, Anzeigen eines Zuweisungssymbols (438, 440) zwischen dem ersten Objekt (408) und dem Ordnerobjekt (416) und/oder zwischen dem ersten Objekt und den zweiten Objekten (418, 420, 422), die Objekttypen der Teilmenge aufweisen, wodurch die Zuweisungen des ersten Objekts zu den zweiten Objekten durch eine einzige Eingabeoperation eingegeben werden.

2. Verfahren nach Anspruch 1, ferner mit dem Schritt des Anzeigens der Teilhierarchie des Ordnerobjekts als Reaktion auf eine Benutzereingabeaktion und des Anzeigens von Zuweisungssymbolen zwischen dem ersten Objekt und dem Ordnerobjekt und zwischen dem ersten Objekt und den zweiten Objekten der Teilhierarchie, wobei die Zuweisungssymbole jeweilige Kanten repräsentieren, die die erste und die zweite Objekthierarchie verbinden.

3. Verfahren nach Anspruch 1, ferner mit dem Schritt des Anzeigens der Teilhierarchie des Ordnerobjekts und des Anzeigens des ersten Zuweisungssymbols und von zweiten Zuweisungssymbolen, wobei das erste Zuweisungssymbol eine definierende Kante zwischen dem ersten Objekt und dem Ordnerobjekt repräsentiert und die zweiten Zuweisungssymbole jeweilige abhängige Kanten zwischen dem ersten Objekt und den zweiten Objekten der Teilhierarchie repräsentieren.

4. Verfahren nach Anspruch 3, bei dem ferner der definierenden Kante eine eindeutige Kennung zugewiesen wird und jeder der abhängigen Kanten eine eindeutige Kennung zugewiesen wird, und die definierenden und abhängigen Kanten unter Verwendung der jeweiligen eindeutigen Kennungen als Schlüssel in einer Datenbanktabelle (110) gespeichert werden, wobei die Datenbanktabelle eine Spalte zum Speichern der eindeutigen Kennung der definierenden Kante zur Identifikation der abhängigen Kanten, die von der definierenden Kante abhängen, aufweist.

5. Verfahren nach Anspruch 4, wobei Löschung der definierenden Kante automatische Löschung der abhängigen Kanten verursacht.

6. Verfahren nach Anspruch 5, wobei die Löschung durch eine Auswahl des ersten Zuweisungssymbols und Eingeben eines Löschbefehls durchgeführt wird.

7. Verfahren nach einem der vorhergehenden Ansprüche, ferner mit dem Schritt des Hinzufügens eines Objekts (448), das einen Objekttyp der Teilmenge aufweist, zu der Teilhierarchie und des Anzeigens eines Zuweisungssymbols zwischen dem ersten Objekt und dem Objekt, das zu der Teilhierarchie hinzugefügt wurde.

8. Verfahren nach einem der vorhergehenden Ansprüche, ferner mit dem Schritt des Durchführens einer Modusauswahloperation zum Auswählen eines ersten oder zweiten Zuweisungseingabemodus, wobei im ersten Zuweisungseingabemodus eine definierende Kante, die abhängige Kanten zwischen dem ersten Objekt und zweiten Objekten der Teilhierarchie, die einen Objekttyp der Teilmenge aufweisen, aufweist, eingegeben wird und wobei im zweiten Zuweisungseingabemodus unabhängige Kanten zwischen dem ersten Objekt und vom Benutzer ausgewählten zweiten Objekten, die einen Objekttyp der Teilmenge aufweisen und zu der Teilhierarchie gehören, eingegeben werden, wodurch die unabhängigen Kanten individuell ausgelöscht werden können.

9. Computerprogrammprodukt zum Eingeben von Zuweisungen eines ersten Objekts (408) einer ersten Objekthierarchie (404) zu zweiten Objekten (416, 418, 420, 448) einer zweiten Objekthierarchie (412), wobei mindestens die zweite Objekthierarchie mehrere Objekte und mindestens ein Ordnerobjekt (416) aufweist, wobei jedes Objekt einen Objekttyp einer vordefinierten Menge von Objekttypen (126, 130, 132) aufweist, wobei mindestens ein Ordnerobjekt (416) die Wurzel einer Teilhierarchie von Objekten (418, 420, 422) ist, wobei das erste Objekt eine assoziierte Teilmenge (130, 132) der ersten Menge von Objekttypen (128, 134) aufweist, wobei das Computerprogrammprodukt computerausführbare Anweisungen für Folgendes umfasst:
- Anzeigen der ersten und der zweiten Objekthierarchie,
- Auswählen des ersten Objekts (408) aus der ersten Objekthierarchie (404) durch den Benutzer mittels einer grafischen Benutzeroberfläche,
- Anzeigen eines Indikatorsymbols (432) für das mindestens eine Ordnerobjekt (416), wenn die Teilhierarchie des Ordnerobjekts zweite Objekte (418, 420) enthält, die Objekttypen (130, 132) der Teilmenge aufweisen,
- als Reaktion auf eine Benutzerauswahl des Ordnerobjekts (416) mittels einer grafischen Benutzeroberfläche, wenn das Indikatorsymbol (432) angezeigt wird, Anzeigen eines Zuweisungssymbols (438, 440) zwischen dem ersten Objekt (408) und dem Ordnerobjekt (416) und/oder den zweiten Objekten (418, 420), die Objekttypen der Teilmenge aufweisen, wodurch die Zuweisungen des ersten Objekts zu den zweiten Objekten durch eine einzige Eingabeoperation eingegeben werden.

10. Computerprogrammprodukt nach Anspruch 9, ferner mit Anweisungen zum Zugreifen auf eine Regelbasis, wobei die Regelbasis die mit dem ersten Objekt assoziierte Teilmenge speichert.

11. Computerprogrammprodukt nach Anspruch 9 oder 10, ferner mit computerausführbaren Anweisungen, um der definierenden Kante eine eindeutige Kennung zuzuweisen, und jeder der abhängigen Kanten eine eindeutige Kennung zuzuweisen, und um die definierenden und abhängigen Kanten unter Verwendung der jeweiligen eindeutigen Kennungen als Schlüssel in einer Datenbanktabelle (110) zu speichern, wobei die Datenbanktabelle eine Spalte zum Speichern der eindeutigen Kennung der definierenden Kante zur Identifikation der abhängigen Kanten, die von der definierenden Kante abhängen, aufweist.

12. Computerprogrammprodukt nach Anspruch 9, 10 oder 11, ferner mit computerausführbaren Anweisungen für eine Benutzereingabe einer Modusauswahl zum Auswählen eines ersten eines zweiten Zuweisungseingabemodus, wobei im ersten Zuweisungseingabemodus eine definierende Kante, die abhängige Kanten zwischen dem ersten Objekt und zweiten Objekten der Teilhierarchie, die einen Objekttyp der Teilmenge aufweisen, aufweist, eingegeben wird und wobei im zweiten Zuweisungseingabemodus unabhängige Kanten zwischen dem ersten Objekt und vom Benutzer ausgewählten zweiten Objekten, die einen Objekttyp der Teilmenge aufweisen und zu der Teilhierarchie gehören, eingegeben werden, wodurch die unabhängigen Kanten individuell ausgelöscht werden können.

13. Datenverarbeitungssystem, umfassend:
- Mittel (104, 108, 110) zum Speichern einer ersten und einer zweiten Objekthierarchie, wobei mindestens die zweite Objekthierarchie (412) mehrere Objekte und mindestens ein Ordnerobjekt (416) aufweist, wobei jedes Objekt der ersten und der zweiten Objekthierarchie einen Objekttyp einer vordefinierten Menge von Objekttypen aufweist, wobei mindestens ein Ordnerobjekt (416) die Wurzel einer Teilhierarchie von Objekten ist,
- eine Regelbasis (106) zur Speicherung von Objekttypen und assoziierten Teilmengen der Menge von Objekttypen,
- Mittel (112, 114, 118) zum Anzeigen der ersten und zweiten Objekthierarchie (404, 412) auf einer grafischen Benutzeroberfläche (116), wobei die grafische Benutzeroberfläche dafür ausgelegt ist, eine Benutzerauswahl des ersten Objekts (408) aus der ersten Objekthierarchie (404) zu ermöglichen, und zum Anzeigen eines Indikatorsymbols (432, 434, 436, ...) für das mindestens eine Ordnerobjekt (416), wenn die Teilhierarchie des Ordnerobjekts zweite Objekte (418, 420) enthält, die Objekttypen (130, 132) der mit dem ersten Objekt assoziierten Teilmenge aufweisen, und zum Anzeigen eines Zuweisungssymbols (438, 440, 442) zwischen dem ersten Objekt (408) und dem Ordnerobjekt (416) und/oder den zweiten Objekten (418, 420) als Reaktion auf eine Benutzerauswahl des Ordnerobjekts (416), wenn das Indikatorsymbol (432) angezeigt wird, wodurch Zuweisungen des ersten Objekts zu den zweiten Objekten durch eine einzige Eingabeoperation eingegeben werden.

14. Datenverarbeitungssystem nach Anspruch 13, ferner mit Mitteln zum Anzeigen der Teilhierarchie des Ordnerobjekts als Reaktion auf eine BenutzerEingabeaktion und zum Anzeigen von Zuweisungssymbolen zwischen dem ersten Objekt und dem Ordnerobjekt und zwischen dem ersten Objekt und den zweiten Objekten der Teilhierarchie, wobei die Zuweisungssymbole jeweilige Kanten repräsentieren, die die erste und die zweite Objekthierarchie verbinden.

15. Datenverarbeitungssystem nach Anspruch 13, ferner mit Mitteln zum Anzeigen der Teilhierarchie des Ordnerobjekts und zum Anzeigen des ersten Zuweisungssymbols und von zweiten Zuweisungssymbolen, wobei das erste Zuweisungssymbol eine definierende Kante zwischen dem ersten Objekt und dem Ordnerobjekt repräsentiert und die zweiten Zuweisungssymbole jeweilige abhängige Kanten zwischen dem ersten Objekt und den zweiten Objekten der Teilhierarchie repräsentieren.

16. Datenverarbeitungssystem nach Anspruch 15, ferner mit Mitteln, um der definierenden Kante eine eindeutige Kennung zuzuweisen und jeder der abhängigen Kanten eine eindeutige Kennung zuzuweisen, und um die definierenden und abhängigen Kanten unter Verwendung der jeweiligen eindeutigen Kennungen als Schlüssel in einer Datenbanktabelle (110) zu speichern, wobei die Datenbanktabelle eine Spalte zum Speichern der eindeutigen Kennung der definierenden Kante zur Identifikation der abhängigen Kanten, die von der definierenden Kante abhängen, aufweist.

17. Datenverarbeitungssystem nach einem der Ansprüche 13 bis 16, wobei die grafische Benutzeroberfläche für eine Benutzereingabe einer Modusauswahl ausgelegt ist, um einen ersten oder zweiten Zuweisungseingabemodus auszuwählen, wobei im ersten Zuweisungseingabemodus eine definierende Kante, die abhängige Kanten zwischen dem ersten Objekt und zweiten Objekten der Teilhierarchie, die einen Objekttyp der Teilmenge aufweisen, aufweist, eingegeben wird und wobei im zweiten Zuweisungseingabemodus unabhängige Kanten zwischen dem ersten Objekt und vom Benutzer ausgewählten zweiten Objekten, die einen Objekttyp der Teilmenge aufweisen und zu der Teilhierarchie gehören, eingegeben werden, wodurch die unabhängigen Kanten individuell ausgelöscht werden können.

## Revendications

1. Procédé de saisie d'affectations entre un premier objet (408) d'une première hiérarchie d'objets (404) et des seconds objets (416, 418, 420, 448) d'une seconde hiérarchie d'objets (412), au moins la seconde hiérarchie d'objets ayant une pluralité d'objets (414, 416, 418, 420, 422, 424, 448) et au moins un objet de dossier (416), chaque objet ayant un type d'objet d'un ensemble prédéfini de types d'objets (126, 130, 132), l'au moins un objet de dossier (416) étant la racine d'une sous-hiérarchie d'objets (418, 420, 422), le premier objet ayant un sous-ensemble associé (130, 132) de l'ensemble de types d'objets (128, 134), le procédé comprenant :
- l'affichage des première et seconde hiérarchies d'objets,
- la sélection du premier objet (408) dans la première hiérarchie d'objets (404),
- l'affichage d'un symbole d'indicateur (432, 434, 436, 437) de l'au moins un objet de dossier (416), si la sous-hiérarchie de l'objet de dossier contient des seconds objets (418, 420) ayant des types d'objets du sous-ensemble,
- en réponse à une sélection de l'objet de dossier (416) quand le symbole d'indicateur est affiché, l'affichage d'un symbole d'affectation (438, 440) entre le premier objet (408) et l'objet de dossier (416) et/ou entre le premier objet et les seconds objets (418, 420, 422) ayant des types d'objets du sous-ensemble, par lequel les affectations entre le premier objet et les seconds objets sont saisies par une opération de saisie unique.

2. Procédé selon la revendication 1, comprenant en outre l'affichage de la sous-hiérarchie de l'objet de dossier en réponse à une action de saisie d'utilisateur et l'affichage de symboles d'affectations entre le premier objet et l'objet de dossier et entre le premier objet et les seconds objets de la sous-hiérarchie, les symboles d'affectations étant représentatifs de bords respectifs reliant les première et seconde hiérarchies d'objets.

3. Procédé selon la revendication 1, comprenant en outre l'affichage de la sous-hiérarchie de l'objet de dossier et l'affichage des premier symbole d'affectation et seconds symboles d'affectations, le premier symbole d'affectation étant représentatif d'un bord de définition entre le premier objet et l'objet de dossier et les seconds symboles d'affectations étant représentatifs de bords dépendants respectifs entre le premier objet et les seconds objets de la sous-hiérarchie.

4. Procédé selon la revendication 3, comprenant en outre l'affectation d'un identifiant unique au bord de définition et l'affectation d'un identifiant unique à chacun des bords dépendants, la mémorisation des bords de définition et dépendants dans une table de base de données (110) en utilisant les identifiants uniques respectifs comme clés, par lequel la table de base de données a une colonne pour mémoriser l'identifiant unique du bord de définition pour l'identification des bords dépendants qui dépendent du bord de définition.

5. Procédé selon la revendication 4, dans lequel l'effacement du bord de définition entraîne l'effacement automatique des bords dépendants.

6. Procédé selon la revendication 5, dans lequel l'effacement est exécuté par une sélection du premier symbole d'affectation et la saisie d'une commande d'effacement.

7. Procédé selon l'une quelconque des revendications précédentes, comprenant en outre l'ajout d'un objet (448) ayant un type d'objet du sous-ensemble à la sous-hiérarchie et l'affichage d'un symbole d'affectation entre le premier objet et l'objet qui a été ajouté à la sous-hiérarchie.

8. Procédé selon l'une quelconque des revendications précédentes, comprenant en outre l'exécution d'une opération de sélection de mode pour sélectionner un premier ou second mode de saisie d'affectation, dans lequel dans le premier mode de saisie d'affectation un bord de définition ayant des bords dépendants entre le premier objet et des seconds objets de la sous-hiérarchie ayant un type d'objet du sous-ensemble est saisi, et dans lequel dans le second mode de saisie d'affectation des bords indépendants entre le premier objet des seconds objets sélectionnés par l'utilisateur ayant un type d'objet du sous-ensemble et appartenant à la sous-hiérarchie sont saisis, par lequel les bords indépendants peuvent être effacés individuellement.

9. Produit-programme informatique pour saisir des affectations entre un premier objet (408) d'une première hiérarchie d'objets (404) et des seconds objets (416, 418, 420, 448) d'une seconde hiérarchie d'objets (412), au moins la seconde hiérarchie d'objets ayant une pluralité d'objets et au moins un objet de dossier (416), chaque objet ayant un type d'objet d'un ensemble prédéfini de types d'objets (126, 130, 132), l'au moins un objet de dossier (416) étant la racine d'une sous-hiérarchie d'objets (418, 420, 422), le premier objet ayant un sous-ensemble associé (130, 132) de l'ensemble de types d'objets (128, 134), le produit-programme informatique comprenant des instructions exécutables par ordinateur pour :
- afficher les première et seconde hiérarchies d'objets,
- sélectionner par l'utilisateur le premier objet (408) dans la première hiérarchie d'objets (404) au moyen d'une interface d'utilisateur graphique,
- afficher un symbole d'indicateur (432) de l'au moins un objet de dossier (416), si la sous-hiérarchie de l'objet de dossier contient des seconds objets (418, 420) ayant des types d'objets (130, 132) du sous-ensemble,
- en réponse à une sélection par l'utilisateur de l'objet de dossier (416) au moyen de l'interface d'utilisateur graphique quand le symbole d'indicateur (432) est affiché, afficher un symbole d'affectation (438, 440) entre le premier objet (408) et l'objet de dossier (416) et/ou les seconds objets (418, 420) ayant des types d'objets du sous-ensemble, par lequel les affectations entre le premier objet et les seconds objets sont saisies par une opération de saisie unique.

10. Produit-programme informatique selon la revendication 9, comprenant en outre des instructions pour accéder à une base de règles, la base de règles mémorisant le sous-ensemble associé au premier objet.

11. Produit-programme informatique selon la revendication 9 ou 10, comprenant en outre des instructions exécutables par ordinateur pour affecter un identifiant unique au bord de définition et affecter un identifiant unique à chacun des bords dépendants, mémoriser les bords de définition et dépendants dans une table de base de données (110) en utilisant les identifiants uniques respectifs comme clés, par lequel la table de base de données a une colonne pour mémoriser l'identifiant unique du bord de définition pour l'identification des bords dépendants qui dépendent du bord de définition.

12. Produit-programme informatique selon la revendication 9, 10 ou 11, comprenant en outre des instructions exécutables par ordinateur pour une saisie par l'utilisateur d'une sélection de mode pour sélectionner un premier ou second mode de saisie d'affectation, dans lequel dans le premier mode de saisie d'affectation un bord de définition ayant des bords dépendants entre le premier objet et des seconds objets de la sous-hiérarchie ayant un type d'objet du sous-ensemble est saisi, et dans lequel dans le second mode de saisie d'affectation des bords indépendants entre le premier objet et des seconds objets sélectionnés par l'utilisateur ayant un type d'objet du sous-ensemble et appartenant à la sous-hiérarchie sont saisis, par lequel les bords indépendants peuvent être effacés individuellement.

13. Système de traitement de données comprenant :
- un moyen (104, 108, 110) pour mémoriser des première et seconde hiérarchies d'objets, au moins la seconde hiérarchie d'objets (412) ayant une pluralité d'objets et au moins un objet de dossier (416), chaque objet des première et seconde hiérarchies d'objets ayant un type d'objet d'un ensemble prédéfini de types d'objets, l'au moins un objet de dossier (416) étant la racine d'une sous-hiérarchie d'objets,
- une base de règles (106) pour la mémorisation de types d'objets et sous-ensembles associés de l'ensemble de types d'objets,
- un moyen (112, 114, 118) pour afficher les première et seconde hiérarchies d'objets (404, 412) sur une interface d'utilisateur graphique (116), l'interface d'utilisateur graphique étant adaptée pour permettre une sélection par l'utilisateur du premier objet (408) dans la première hiérarchie d'objets (404) et pour afficher un symbole d'indicateur (432, 434, 436, ...) de l'au moins un objet de dossier (416) si la sous-hiérarchie de l'objet de dossier contient des seconds objets (418, 420) ayant des types d'objets (130, 132) du sous-ensemble associé au premier objet, et en réponse à une sélection par l'utilisateur de l'objet de dossier (416) quand le symbole d'indicateur (432) est affiché, afficher un symbole d'affectation (438, 440, 442) entre le premier objet (408) et l'objet de dossier (416) et/ou les seconds objets (418, 420) de la sous-hiérarchie, par lequel les affectations entre le premier objet et les seconds objets sont saisies par une opération de saisie unique.

14. Système de traitement de données selon la revendication 13, comprenant en outre un moyen pour afficher la sous-hiérarchie de l'objet de dossier en réponse à une action de saisie d'utilisateur et afficher des symboles d'affectations entre le premier objet et l'objet de dossier et entre le premier objet et les seconds objets de la sous-hiérarchie, les symboles d'affectations étant représentatifs de bords respectifs reliant les première et seconde hiérarchies d'objets.

15. Système de traitement de données selon la revendication 13, comprenant en outre un moyen pour afficher la sous-hiérarchie de l'objet de dossier et afficher le premier symbole d'affectation et des seconds symboles d'affectations, le premier symbole d'affectation étant représentatif d'un bord de définition entre le premier objet et l'objet de dossier et les seconds symboles d'affectations étant représentatifs de bords dépendants respectifs entre le premier objet et les seconds objets de la sous-hiérarchie.

16. Système de traitement de données selon la revendication 15, comprenant en outre un moyen pour affecter un identifiant unique au bord de définition et affecter un identifiant unique à chacun des bords dépendants, mémoriser les bords de définition et dépendants dans une table de base de données (110) en utilisant les identifiants uniques respectifs comme clés, par lequel la table de base de données a une colonne pour mémoriser l'identifiant unique du bord de définition pour l'identification des bords dépendants qui dépendent du bord de définition.

17. Système de traitement de données selon l'une quelconque des revendications 13 à 16, l'interface d'utilisateur graphique étant adaptée pour une saisie par l'utilisateur d'une sélection de mode pour sélectionner un premier ou second mode de saisie d'affectation, dans lequel dans le premier mode de saisie d'affectation un bord de définition ayant des bords dépendants entre le premier objet et des seconds objets de la sous-hiérarchie ayant un type d'objet du sous-ensemble est saisi, et dans lequel dans le second mode de saisie d'affectation des bords indépendants entre le premier objet et des seconds objets sélectionnés par l'utilisateur ayant un type d'objet du sous-ensemble et appartenant à la sous-hiérarchie sont saisis, par lequel les bords indépendants peuvent être effacés individuellement.
